# FASCICULE DE BREVET EUROPEEN

(11) **EP 3 717 225 B1**
(45) Date de publication et mention de la délivrance du brevet: **07.07.2021**
(21) Numéro de dépôt: 18833265.4
(22) Date de dépôt: 30.11.2018
(51) Int. Cl.: B29D 30/46, B29C 43/24, B29C 43/28, B29D 30/38, B29K 105/10

(54) **PROCEDE DE FABRICATION DE LAIZES POUR NAPPE DE RENFORT DE PNEUMATIQUE PAR ABOUTAGE DE BANDELETTES DROIT FIL**
VERFAHREN ZUR HERSTELLUNG VON BAHNEN FÜR VERSTÄRKUNGSLAGE EINES REIFENS DURCH STUMPFSCHWEISSEN VON STREIFEN MIT GERADEN DRÄHTEN
METHOD FOR PRODUCING WEBS FOR REINFORCEMENT PLY OF A TYRE BY BUTT-JOINING OF STRAIGHT-WIRE STRIPS

(30) Priorité: 01.12.2017 FR 1761538
(43) Date de publication de la demande: 07.10.2020
(73) Titulaire: Compagnie Générale des Etablissements Michelin, 63000 Clermont-Ferrand (FR)
(72) Inventeur: LHOSPITALIER, Jean-François, 63040 Clermont-Ferrand Cedex 9 (FR)
(74) Mandataire: Redouté, Gilles Pierre
(86) Numéro de dépôt international: PCT/FR2018/053072
(87) Numéro de publication internationale: WO 2019/106322

(56) Documents cités:
- EP-A1- 1 674 246
- EP-A1- 3 199 311
- EP-A1- 3 238 925
- WO-A1-2008/077418
- WO-A1-2013/048384

## Description

La présente invention concerne le domaine de la fabrication de bandages, et notamment de bandages pneumatiques destinés à équiper des véhicules roulants.

La présente invention concerne plus particulièrement la fabrication de nappes de renfort entrant dans la structure de tels bandages.

Il est connu, notamment par le document EP-3 238 925, de réaliser des nappes de renfort en produisant tout d'abord, par calandrage, une nappe dite nappe droit fil, qui comprend une pluralité de fils de renfort qui sont orientés parallèlement à la direction longitudinale de ladite nappe et qui sont noyés dans une gomme, puis en découpant dans cette nappe droit fil, au moyen d'une coupeuse, selon un angle de coupe prédéterminé, des tronçons de nappe droit fil dits « laizes », puis en aboutant deux à deux lesdites laizes par leurs lisières, parallèles aux fils de renfort, de manière à constituer finalement une nappe de renfort au sein de laquelle les fils de renfort forment, par rapport à la direction longitudinale de ladite nappe, un angle, dit « angle de nappe », qui résulte de l'angle de coupe choisi.

Afin d'homogénéiser et d'optimiser les équipements de production pour la fabrication de bandages en grande série, les fabricants de bandages, notamment de bandages pneumatiques ont généralement défini, pour leurs lignes de production, un format standard de largeur de nappe droit fil, ou parfois quelques formats standard de largeur de nappe droit fil, en nombre restreint, et développé, pour chaque format standard de largeur, d'une part des calandres qui génèrent, en noyant les fils de renfort entre deux couches de gomme, des nappes droit fil dont la largeur frontale correspond à ce format standard de largeur, et d'autre part des coupeuses dont les capacités de découpe sont également adaptées à, et optimisées pour, ce format standard de largeur.

Par ailleurs, les fils de renfort utilisés par les calandres sont généralement conditionnés sous forme de bobines qui contiennent une grande longueur de stockage de chaque fil, typiquement de l'ordre de 5 000 m à 10 000 m, voire 30 000 m, par fil de renfort et par bobine.

Pour assurer la production d'une nappe droit fil de bonne qualité, ces fils de renfort doivent être convenablement positionnés en entrée de la calandre, parallèlement les uns aux autres et espacés les uns des autres selon un pas déterminé. A cet effet, l'entrée de la calandre est pourvue d'une structure destinée à porter et à dérouler des bobines de fils de renfort, telle qu'un râtelier, ainsi que de moyens de guidage idoine, permettant de positionner les fils de renfort.

Afin de limiter les opérations de manutention et de mise en place des fils de renfort, et donc afin d'optimiser la productivité des calandres, il est hautement préférable, une fois que l'ensemble des nombreux fils de renfort sont mis en place sur la structure de guidage, de réaliser un calandrage continu jusqu'à épuisement du fil de renfort disponible.

En pratique, la surface de nappe droit fil produite par une calandre au cours d'une même opération de calandrage, dite aussi « campagne de calandrage », est donc généralement déterminée par la longueur totale de stockage des fils de renfort contenus sur la ou les bobines utilisées pour alimenter la calandre, et, plus particulièrement, ladite surface de nappe droit fil produite au cours d'une même campagne de calandrage est généralement sensiblement égale au produit de la largeur frontale de la nappe droit fil, qui sort de la calandre, par la longueur totale de stockage des fils de renfort, qui sont intégralement consommés lors de ladite opération de calandrage.

Or, est apparue récemment la nécessité de réaliser des productions de pneumatiques selon des séries dont la taille, c'est-à-dire le nombre total de pneumatiques constituant la série de pneumatiques considérée, est plus réduite qu'auparavant, et ce notamment afin de répondre à des marchés plus spécifiques.

Typiquement, on pourra notamment viser des séries dont la taille pourra être de l'ordre de quelques centaines de pneumatiques.

De prime abord, les équipements de production existants semblent peu adaptés à une telle fabrication en séries restreintes.

En effet, une série de taille réduite implique un moindre besoin en nappe de renfort, et par conséquent requiert une moindre surface de nappe droit fil.

Certes, pour réduire la surface de nappe droit fil produite, on pourrait envisager de réduire la longueur de ladite nappe droit fil, en interrompant l'opération de calandrage une fois la longueur désirée atteinte.

Toutefois, l'interruption de l'opération de calandrage aurait pour inconvénient d'immobiliser la calandre, et d'augmenter le nombre d'interventions nécessaires à la manutention et à la mise en place des fils de renfort, au détriment de la productivité de la calandre.

On pourrait également envisager de produire d'un seul tenant une nappe droit fil en consommant la totalité des fils de renfort, puis de stocker le surplus de longueur de nappe droit fil produite, non utilisé pour la série concernée, en attente d'une éventuelle utilisation future.

Toutefois, dans la mesure où d'une part le stockage s'accompagne d'un phénomène de vieillissement susceptible de dégrader les propriétés des matériaux, et notamment de la gomme, et donc plus globalement de la nappe droit fil stockée, et où d'autre part il est difficile de garantir qu'un surplus de nappe droit fil présentant des caractéristiques spécifiques à une première série de pneumatiques pourra effectivement être réutilisé, et a fortiori intégralement réutilisé, pour une seconde série de pneumatiques distincte, une telle solution de stockage induirait inévitablement un certain gaspillage de matière première et d'énergie.

Une autre possibilité pourrait consister à produire par calandrage une nappe droit fil de largeur réduite, choisie de telle sorte que le produit de ladite largeur réduite par la longueur de stockage des fils de renfort serait sensiblement égal à la surface de nappe droit fil juste nécessaire pour fabriquer la série de pneumatiques concernée.

Cependant, le rendement des coupeuses, qui est exprimé en surface de laizes produite par unité de temps, dépend de la cadence de la coupeuse, c'est-à-dire du nombre de coupes que l'on peut effectuer par unité de temps en actionnant la coupeuse, ainsi que de la largeur de la nappe droit fil entrante avec laquelle on alimente la coupeuse.

A ce titre, on notera que, dans l'absolu, augmenter la cadence de la coupeuse provoquerait inévitablement une accélération de l'usure de l'organe de coupe de ladite coupeuse (organe de coupe qui peut être par exemple une lame de type guillotine ou un disque coupant), et obligerait à procéder à une maintenance plus fréquente, et donc plus onéreuse.

Concrètement, le rendement d'une coupeuse dépend donc généralement essentiellement de la largeur de la nappe droit fil entrante, que l'on coupe à chaque actionnement de l'organe de coupe.

Par conséquent, le fait d'alimenter les coupeuses existantes avec une nappe droit fil de largeur réduite aurait pour effet de faire chuter le rendement desdites coupeuses.

Par ailleurs, on connaît, par le brevet européen EP-1 712 346, un dispositif qui permet de créer une nappe droit fil en enroulant et en aboutant sur elle-même une bandelette droit fil, en spirale sur un ensemble de deux cylindres horizontaux, et d'extraire directement de cette nappe droit fil, en continu, au moyen d'un couteau appliqué contre l'un des cylindres, une nappe de renfort.

Un tel dispositif présente toutefois une grande complexité, et nécessite de nombreux réglages notamment pour positionner le couteau en longueur et en lacet par rapport à l'axe du cylindre, afin de définir notamment la largeur de la nappe de renfort extraite, ou encore pour ajuster l'entraxe des cylindres, qui conditionne la longueur des portions de bandelettes au sein de la nappe de renfort, et donc qui conditionne l'angle de nappe, pour une largeur de nappe de renfort donnée.

Un tel dispositif peut donc se révéler relativement onéreux à mettre en œuvre, et présenter certaines faiblesses en matière de fiabilité.

Les objets assignés à l'invention visent par conséquent à remédier aux inconvénients susmentionnés et à proposer un procédé de production de laizes, et plus globalement de nappes de renfort, qui soit fiable, polyvalent, de manière à pouvoir s'adapter à des fabrications de pneumatiques selon des séries de tailles très variées, tout en évitant le gaspillage de matière première et en permettant d'optimiser le rendement et le coût de maintenance des coupeuses.

Plus particulièrement, l'invention vise à proposer un procédé qui puisse être mis en œuvre, à moindre coût, sur des installations existantes, notamment des coupeuses existantes, tout en conservant le rendement ainsi que le bénéfice de la robustesse desdites installations.

Les objets assignés à l'invention sont atteints au moyen d'un procédé de fabrication de laizes destinées à entrer dans la constitution d'une nappe de renfort pour pneumatique, ledit procédé comprenant les étapes suivantes :
(i) une étape (a) de préparation au cours de laquelle on prépare plusieurs bobines distinctes contenant chacune une bandelette, dite « bandelette droit fil », qui est formée d'une pluralité de fils de renfort continus qui sont noyés dans au moins une couche de gomme et qui s'étendent parallèlement entre eux selon la direction longitudinale de ladite bandelette, chacune desdites bandelettes droit fil présentant, perpendiculairement à ses fils de renfort, une largeur dite « largeur frontale » prédéterminée ; puis
(ii) une étape (b) d'aboutage, au cours de laquelle on déroule simultanément les bandelettes droit fil contenues sur lesdites plusieurs bobines distinctes, et l'on aboute deux à deux lesdites bandelettes droit fil selon une même direction longitudinale commune, de sorte à réunir l'ensemble desdites bandelettes droit fil en une nappe droit fil, dont les fils de renfort s'étendent selon la direction longitudinale commune, et qui présente, perpendiculairement auxdits fils de renfort, une largeur frontale de nappe droit fil qui est supérieure à la largeur frontale individuelle de chaque bandelette droit fil, puis
(iii)une étape (c) de coupe, au cours de laquelle on engage la nappe droit fil dans une coupeuse qui possède une capacité de coupe maximale déterminée, dite « largeur d'entrée de coupeuse », qui correspond à la plus grande largeur frontale d'une nappe droit fil que l'on peut engager en entrée de ladite coupeuse, puis, au moyen de ladite coupeuse, on sectionne transversalement, à plusieurs reprises, la nappe droit fil selon une direction de coupe qui est sécante à la direction des fils de renfort, de manière à former des tronçons de nappe droit fil dits « laizes » de longueur prédéterminée ;
ledit procédé étant caractérisé en ce que la largeur frontale de la nappe droit fil qui est produite lors de l'étape (b) d'aboutage puis engagée dans la coupeuse lors de l'étape (c) de coupe est égale ou supérieure à 50%, de préférence égale ou supérieure à 75%, préférentiellement égale ou supérieure à 80%, voire égale ou supérieure à 90% de la largeur d'entrée de coupeuse, tandis que la largeur frontale de la plus large des bandelettes droit fil qui sont aboutées pour confectionner ladite nappe droit fil est inférieure ou égale à 50%, de préférence inférieure ou égale à 40%, préférentiellement inférieure ou égale à 25%, éventuellement, de préférence, inférieure ou égale à 10%, voire inférieure ou égale à 5 % de ladite largeur d'entrée de coupeuse.

Avantageusement, le procédé selon l'invention, permet de combiner une production de bandelettes droit fil sur une faible largeur, par un procédé qui est donc économe en temps de préparation et en matière première, avec une découpe de nappe droit fil de grande largeur, qui permet d'optimiser le rendement des coupeuses.

Le lien entre l'opération génératrice de bandelettes droit fil de faible largeur frontale, ici de préférence une opération de calandrage, et la coupe, consommatrice d'une nappe droit fil que l'on souhaite la plus large possible, et plus particulièrement la plus proche possible de la capacité d'accueil maximale de la coupeuse, est avantageusement réalisé grâce à un aboutage intermédiaire, qui permet d'accoler longitudinalement plusieurs bandelettes droit fil, en continu sur toute leur longueur, pour convertir lesdites bandelettes initialement distinctes, et relativement étroites, issues du calandrage, en une même nappe droit fil de largeur plus adaptée à la coupeuse utilisée.

L'invention permet donc avantageusement de répartir la fabrication de la surface utile totale de nappe droit fil, qui est nécessaire à la fabrication de la série de pneumatiques considérée, en une pluralité de sous-surfaces correspondant à la surface unitaire de chaque bandelettes droit fil.

Plus particulièrement, l'invention peut permettre de fabriquer la totalité de la surface utile totale de la nappe droit fil en réalisant une bandelette droit fil dont la largeur frontale est choisie de sorte que la surface unitaire de ladite bandelette droit fil d'une part est égale à la surface utile totale visée et d'autre part coïncide sensiblement avec le produit de la largeur frontale de ladite bandelette par une longueur de stockage standard de fil de renfort. De la sorte, il est possible de produire l'intégralité de la surface utile à partir d'une seule et même opération de calandrage, de faible largeur, qui consomme la totalité de la longueur des fils de renfort approvisionnant la calandre.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue en perspective, une installation d'aboutage permettant de mettre en œuvre une étape (b) d'aboutage longitudinal de plusieurs bandelettes droit fil selon l'invention.
La figure 2A illustre, selon une vue schématique, une étape (a) de préparation de bandelettes droit fil, par calandrage, selon un procédé de fabrication de laizes conforme à l'invention.
La figure 2B illustre, selon une vue schématique, des opérations du procédé qui sont exécutées en aval des opérations de la figure 2A, afin d'utiliser les bandelettes droit fil pour les étapes (b) d'aboutage puis (c) de coupe.
La figure 3 illustre, selon une vue schématique en perspective, le principe général, connu en soi, de l'aboutage des laizes en une nappe de renfort, puis de l'utilisation de ladite nappe de renfort lors de la fabrication d'un pneumatique.
La figure 4 illustre, selon une vue schématique de dessus, une disposition en escalier des fronts de bandelettes droit fil en fonction de l'angle de coupe prévu sur la coupeuse, de sorte à limiter les pertes de matière (chutes) lors de la première coupe effectuée sur la nappe droit fil.
La figure 5 illustre, selon une vue schématique de dessus incluant des sections sorties, une variante de mise en œuvre d'aboutage par collage, qui peut être appliquée lors de la mise en œuvre d'un procédé selon l'invention.

La présente invention concerne un procédé de fabrication de laizes 1 destinées à entrer dans la constitution d'une nappe de renfort 2 pour bandage 20, et plus préférentiellement pour bandage pneumatique 20 (dit communément « pneumatique »).

Par simple commodité de description, on pourra assimiler dans ce qui suit « bandage » et « pneumatique », étant bien entendu que l'invention trouve à s'appliquer à la confection de tous types de bandages, y compris des bandages pleins, non pneumatiques, destinés par exemple à des roues anti-crevaison à structure interne alvéolaire.

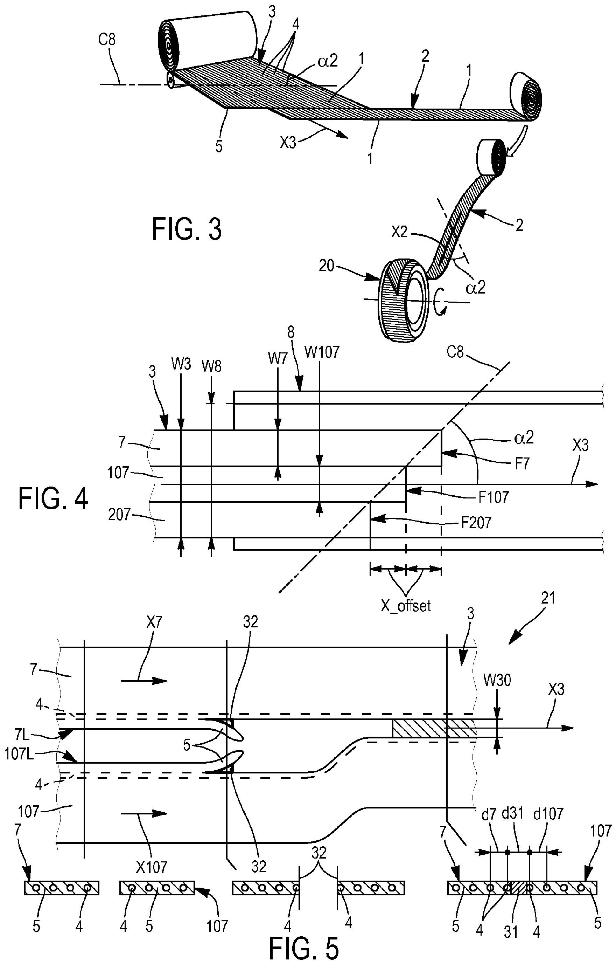

La nappe de renfort 2 pourra servir par exemple de nappe carcasse, ou bien de nappe sommet destinée à renforcer le sommet du pneumatique 20, sous la bande de roulement, tel que cela est illustré sur la figure 3.

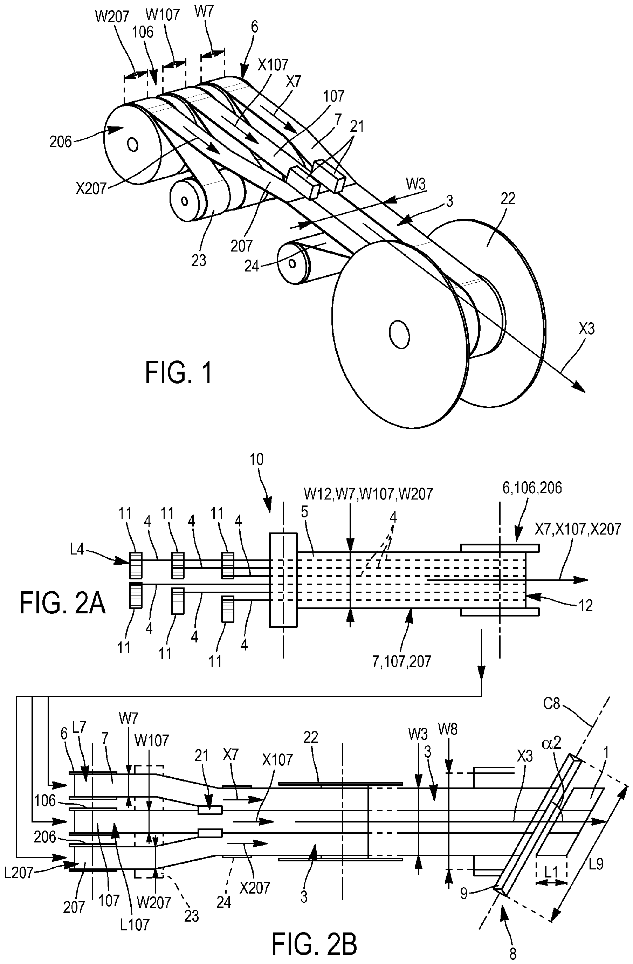

De façon connue en soi, tel que cela est illustré sur les figures 2B et 3, et tel que cela sera détaillé ci-après, une laize 1 correspond à un tronçon d'une nappe droit fil 3, prélevé dans ladite nappe droit fil 3 par une opération de coupe effectuée selon une direction de coupe C8 sécante à la direction longitudinale X3 de ladite nappe droit fil 3.

Par « nappe droit fil » 3, on désigne une nappe formée par une pluralité de fils de renfort 4 continus, qui sont disposés parallèlement entre eux et parallèlement à la direction longitudinale X3 de la nappe, et noyés dans une gomme 5.

Les fils de renfort 4 peuvent être en matériau métallique ou en matériau textile, tel que du nylon ou de l'aramide, ou en tout autre matériau approprié dont le module d'élasticité est supérieur à celui de la gomme 5. Chaque fil de renfort 4 peut être mono-filament, c'est-à-dire formé d'un unique brin d'un seul tenant, ou bien multi-filament, c'est-à-dire formé de plusieurs brins réunis en un câble.

Par « gomme » 5, on désigne un matériau élastomère, à base de caoutchouc cru, c'est-à-dire non vulcanisé, ou à base d'un mélange de caoutchoucs crus, ledit ou lesdits caoutchoucs pouvant être synthétiques ou naturels.

Bien entendu, ladite gomme 5 peut contenir des charges, telles que de la silice ou le noir de carbone, des adjuvants, tels que le soufre, des plastifiants, tels que des huiles, etc.

Le procédé selon l'invention comprend tout d'abord une étape (a) de préparation au cours de laquelle on prépare plusieurs bobines 6, 106, 206 distinctes contenant chacune une bandelette 7, 107, 207, dite « bandelette droit fil », qui est formée d'une pluralité de fils de renfort 4 continus qui sont noyés dans au moins une couche de gomme 5 et qui s'étendent parallèlement entre eux selon la direction longitudinale X7, X107, X207 de ladite bandelette, chacune desdites bandelettes droit fil 7, 107, 207 présentant, perpendiculairement à ses fils de renfort, une largeur dite « largeur frontale » W7, W107, W207 prédéterminée.

De préférence, tel que cela est illustré sur la figure 2A, la bandelette droit fil 7, 107, 207 sera produite par une opération de calandrage, les fils de renfort 4 disposés parallèlement les uns aux autres étant engagés entre deux couches de gomme 5 (dites aussi « skim de gomme ») qui sont pressées l'une contre l'autre au moyen de cylindres contrarotatifs.

Une telle opération de calandrage peut notamment être réalisée au moyen d'une calandre 10 (machine de calandrage) telle que celle décrite dans la demande de brevet WO-2017/093681 déposée par la demanderesse.

Bien entendu, on pourra utiliser, sans sortir du cadre de l'invention, tout autre procédé adapté pour fabriquer des bandelettes droit fils par enduction de fils de renfort 4 dans une gomme 5, par exemple des procédés d'extrusion/gainage.

Selon l'invention, le procédé comprend ensuite, après l'étape (a) de préparation, une étape (b) d'aboutage, au cours de laquelle, tel que cela est notamment visible sur la figure 1 et sur la partie gauche de la figure 2B, on déroule simultanément les bandelettes droit fil 7, 107, 207 contenues sur lesdites plusieurs bobines 6, 106, 206 distinctes, et l'on aboute deux à deux lesdites bandelettes droit fil 7, 107, 207 selon une même direction longitudinale commune X3, de sorte à réunir l'ensemble desdites bandelettes droit fil 7, 107, 207 en une nappe droit fil 3, dont les fils de renfort 4 s'étendent selon la direction longitudinale commune X3, et qui présente, perpendiculairement auxdits fils de renfort 4, une largeur frontale W3 de nappe droit fil qui est supérieure à la largeur frontale W7, W107, W207 individuelle de chaque bandelette droit fil 7, 107, 207.

L'aboutage pourra être réalisé, par toute méthode connue, et donc par tout poste d'aboutage 21 approprié, par exemple au moyen de molettes qui forcent le rapprochement mutuel et l'adhésion des lisières des bandelettes droit fil 7, 107, 207 les unes aux autres.

De préférence, de façon connue en soi, afin d'éviter que les spires de bandelettes droit fil, respectivement les spires de nappe droit fil 3, n'adhèrent les unes aux autres au sein des bobines 6, 106, 206, on pourra prévoir d'interposer entre lesdites spires, tel que cela est illustré sur la figure 1, des intercalaires 23, 24, formés par des films de tissu, ou bien des films en matière plastique, qui seront enroulés et déroulés conjointement avec lesdites bandelettes ou nappes.

Le procédé comprend ensuite, après l'étape (b) d'aboutage, et tel que cela est notamment illustré sur la partie droite de la figure 2B, une étape (c) de coupe, au cours de laquelle on engage la nappe droit fil 3 dans une coupeuse 8 puis, au moyen de ladite coupeuse 8, on sectionne transversalement, à plusieurs reprises, la nappe droit 3 fil selon une direction de coupe C8 qui est sécante à la direction X3 des fils de renfort 4, de manière à former des tronçons de nappe droit fil dits « laizes » 1 de longueur L1 prédéterminée.

On notera que, par simple commodité de description, la « longueur » L1 des laizes correspond ici à la dimension de la laize 1 mesurée selon la direction longitudinale X3 de la nappe droit fil dont est issue la laize 1, c'est-à-dire à l'intervalle de distance séparant deux découpes effectuées successivement par la coupeuse 8 le long de la nappe droit fil 3, et non pas nécessairement à la plus grande dimension de la laize 1 obtenue.

De façon connue en soi, les laizes 1 sont ensuite aboutées les unes aux autres, par leurs lisières parallèles aux fils de renfort 4, de sorte à former une nappe de renfort 2, tel que cela est illustré sur la figure 3.

En pratique, l'angle, dit « angle de coupe », formé entre la direction de coupe C8 et la direction longitudinale commune X3 des fils de renfort 4 de la nappe droit fil 3 entrant dans la coupeuse 8 définira, et plus particulièrement sera égal à, l'angle dit « angle de nappe » a2 selon lequel les fils de renfort 4 se trouvent finalement orientés par rapport à la direction longitudinale X2 de la nappe de renfort 2.

Par commodité, on pourra donc assimiler angle de coupe et angle de nappe a2 dans ce qui suit.

On notera que la nappe droit fil 3 issue de l'étape (b) d'aboutage pourra être acheminée vers l'entrée de la coupeuse 8 soit directement, en étant entraînée jusqu'à ladite coupeuse 8 au fur et à mesure que ladite nappe droit fil 3 sort du poste d'aboutage 21, soit indirectement, en étant stockée provisoirement, en sortie du poste d'aboutage 21, sur une bobine tampon 22, qui sera ensuite mise en place en entrée de la coupeuse 8 pour y être dévidée au fur et à mesure de la coupe en laizes 1.

La coupeuse 8 possède une capacité de coupe maximale déterminée, dite « largeur d'entrée de coupeuse » W8.

Cette largeur d'entrée de coupeuse W8 correspond à la plus grande largeur frontale d'une nappe droit fil 3 que l'on peut engager en entrée de ladite coupeuse 8.

La coupeuse 8 est conçue pour pouvoir découper la nappe droit fil 3 entrante selon un angle de nappe a2 donné, ou, de préférence, la coupeuse 8 est conçue de sorte à pouvoir être configurée selon un angle de nappe a2 librement choisi parmi une pluralité d'angles de nappe possibles, par exemple dans une plage d'angle de nappe comprise entre 5 degrés et 90 degrés.

On notera qu'un angle de nappe a2 correspond typiquement à la plupart des nappes de renfort dites « nappes carcasse » qui sont destinées à former la carcasse radiale du pneumatique.

La largeur d'entrée W8 de la coupeuse 8 correspond alors à la plus grande largeur frontale W3 d'une nappe droit fil 3 que l'on peut introduire dans la coupeuse 8 et couper selon l'angle de nappe a2, ou selon n'importe lequel des angles de nappe a2 pour lesquels la coupeuse peut être configurée.

En pratique, tel que cela est illustré sur la figure 2B, la coupeuse 8 pourra comporter une lame 9 rectiligne, de type guillotine ou massicot, dont la longueur L9 est supérieure à la longueur du trait de coupe nécessaire pour séparer la nappe droit fil 3 en deux tronçons, c'est-à-dire pour séparer une laize 1 de la nappe droit fil 3 en une opération de coupe, quelle que soit la valeur choisie de l'angle de nappe a2.

En variante, on pourrait bien entendu utiliser, au sein de la coupeuse 8, un organe coupant autre qu'une lame 9 de type guillotine, par exemple un disque coupant qui roule le long d'un rail orienté selon la direction de coupe C8 souhaitée.

De préférence, la largeur d'entrée de coupeuse W8 est comprise entre 300 mm et 2 000 mm, et plus préférentiellement entre 700 mm et 1 600 mm.

Par exemple, la largeur d'entrée de coupeuse W8 pourra être égale à 800 mm, à 1 000 mm, à 1 200 mm, à 1 400 mm ou à 1 600 mm.

De telles largeurs W8 correspondent avantageusement aux largeurs d'entrée usuelles des coupeuses 8 existantes, et permettront ainsi d'exploiter de telles coupeuses 8 existantes.

A titre indicatif, la longueur L9 de la lame 9 de la coupeuse 8 pourra être égale à 4800 mm, pour pouvoir traiter et sectionner en un seul mouvement de coupe une nappe droit fil 3 entrante de largeur frontale W3 valant 1400 mm selon un angle de coupe (et donc un angle de nappe a2) pouvant aller de 90 degrés jusqu'à 17 degrés, ou bien encore être égale à 5600 mm pour pouvoir traiter, sur la même plage d'angles de coupe, une nappe droit fil 3 dont la largeur frontale W3 vaut 1600 mm.

Selon l'invention, la largeur frontale W3 de la nappe droit fil 3 qui est produite lors de l'étape (b) d'aboutage puis engagée dans la coupeuse 8 lors de l'étape (c) de coupe est égale ou supérieure à 50% de la largeur d'entrée de coupeuse W8, de préférence égale ou supérieure à 75% de la largeur d'entrée de coupeuse W8, préférentiellement égale ou supérieure à 80% de la largeur d'entrée de coupeuse W8, voire égale ou supérieure à 90% de la largeur d'entrée de coupeuse W8, tandis que la largeur frontale W7, W107, W207 de la plus large des bandelettes droit fil 7, 107, 207 qui sont aboutées pour confectionner ladite nappe droit fil 3 est inférieure ou égale à 50% de ladite largeur d'entrée de coupeuse W8, de préférence inférieure ou égale à 40% de ladite largeur d'entrée de coupeuse W8, préférentiellement inférieure ou égale à 25% de ladite largeur d'entrée de coupeuse W8, éventuellement, de préférence, inférieure ou égale à 10% de ladite largeur d'entrée de coupeuse W8, voire inférieure ou égale à 5 % de ladite largeur d'entrée de coupeuse W8.

Comme indiqué plus haut, la répartition de la surface utile de la nappe droit fil 3 en plusieurs bandelettes droit fil 7, 107, 207 de largeur réduite, fabriquées séparément puis aboutées, permet de concilier d'une part une production sous forme desdites bandelettes droit fil 7, 107, 207 de l'ensemble de la surface nécessaire à la fabrication de la nappe droit fil 3, ce qui rend ladite production, réalisée de préférence par calandrage, rapide, économe en temps, en matière première et en énergie, avec d'autre part un rendement élevé d'une coupeuse 8 ayant une grande largeur d'entrée W8, ce qui permet de produire des laizes 1 avec un débit surfacique de laizes 1 (c'est-à-dire une surface de laizes produite par unité de temps) élevé.

Avantageusement, en limitant la largeur des bandelettes droit fil 7, 107, 207, et par conséquent en limitant le nombre de fil de renfort 4 parallèles nécessaires au calandrage, on peut notamment réduire le temps d'approvisionnement et de préparation de la calandre 10.

En outre, un nombre de fils de renfort 4 réduit facilitera le contrôle de l'opération de calandrage et améliorera donc la fiabilité de cette opération.

De façon plus préférentielle, la plus large des bandelettes droit fil 7, 107, 207 utilisées présente une largeur frontale W7, W107, W207 comprise entre 5% et 20% de la largeur d'entrée de coupeuse W8.

Plus globalement et plus préférentiellement, chaque bandelette droit fil 7, 107, 207 utilisée présente une largeur frontale W7, W107, W207 unitaire comprise entre 5% et 20% de la largeur d'entrée de coupeuse W8.

De même, de façon particulièrement préférentielle, et notamment en combinaison avec des largeurs frontales W7, W107, W207 unitaires de bandelettes droit fil comprises entre 5% et 20% de la largeur d'entrée de coupeuse W8, la largeur de la nappe droit fil 3 que l'on engage en entrée de la coupeuse 8 présentera une largeur frontale W3 comprise entre 80% et 100%, voire entre 90% et 100% de la largeur d'entrée de coupeuse W8, afin de maximiser le rendement de ladite coupeuse 8.

De préférence, les bandelettes droit fil 7, 107, 207 ont chacune une largeur frontale W7, W107, W207 qui est comprise entre 30 mm et 700 mm, et de façon plus préférentielle comprise entre 40 mm et 200 mm.

Bien entendu, pour rationnaliser la fabrication des bandelettes droit fil 7, 107, 207, on pourra choisir d'instaurer un ou plusieurs formats standardisés pour les largeurs frontales de bandelettes W7, W107, W207, par exemple 40 mm, 50 mm, 100 mm, 120 mm ou 160 mm.

De tels formats standardisés pourront avantageusement correspondre à des sous-multiples, par exemple 1/2, 1/4, 1/5, 1/9, 1/10, des formats de largeur W3 usuels des nappes droit fil 3 que l'on prévoit d'utiliser couramment.

Plus particulièrement de tels formats de largeurs frontales de bandelettes W7, W107, W207 pourront correspondre à des sous-multiples, par exemple 1/2, 1/4, 1/5, 1/9, 1/10, des largeurs d'entrée de coupeuse W8 mentionnées plus haut.

De façon particulièrement préférentielle, on utilisera, parmi les possibilités listées ci-dessus, des formats de 1/2, 1/5 et 1/9.

Par ailleurs, on pourra, lors de l'opération de calandrage, procéder à un ébarbage des bandelettes droit fil 7, 107, 207, c'est-à-dire à un enlèvement de matière, par découpe des bords bruts issus du calandrage, afin d'égaliser la largeur frontale des bandelettes droit fil à la valeur choisie et d'améliorer la qualité des lisières desdites bandelettes droit fil avant l'aboutage.

Les valeurs et les plages de largeur frontale W7, W107, W207 de bandelettes droit fil 7, 107, 207 proposées ci-dessus, qu'elles soient exprimées en valeurs relatives sous forme de pourcentages de la largeur d'entrée de coupeuse W8 ou bien en valeurs absolues, présentent avantageusement un bon compromis entre une largeur
- qui soit suffisamment petite pour limiter, au regard de la longueur de stockage des fils de renfort 4, l'étendue de la surface de bandelette droit fil 7, 107, 207 produite lors d'une même campagne de calandrage à une valeur qui permet ensuite de produire une surface utile, juste nécessaire et suffisante, de nappe droit fil 3 au regard de la production de laizes 1 souhaitée et de la taille de la série de pneumatiques visée,
- tout en étant suffisamment grande pour permettre la production, par aboutage d'un nombre entier raisonnable de bandelettes droit fil 7, 107, 207, d'une nappe droit fil 3 dont la largeur frontale W3 garantit un rendement satisfaisant lors de l'opération de coupe où l'on débite ladite nappe droit fil 3 en laizes 1.

De telles largeurs frontales W7, W107, W207 des bandelettes droit fil offrent ainsi au procédé une grande flexibilité en matière de capacité d'adaptation à différentes tailles de séries de pneumatiques, et une grande liberté de choix de format de nappe droit fil 3.

L'invention confère donc une grande polyvalence aux installations de production.

La largeur frontale W7, W107, W207 de bandelette droit fil 7, 107, 207 est en outre choisie suffisamment grande pour s'assurer de la bonne tenue de la bandelette droit fil 7, 107, 207 lors de sa fabrication et lors de son acheminement guidé au sein de la calandre 10 puis sur le poste d'aboutage 21.

De préférence, lors de l'étape (b) d'aboutage, on pourra abouter entre elles un nombre de bandelettes droit fil 7, 107, 207 compris entre deux et vingt, et plus préférentiellement on peut abouter (de front) quatre, cinq, ou jusqu'à dix bandelettes droit fil, pour constituer la nappe droit fil 3.

Ce nombre de bandelettes droit fil 7, 107, 207 sera plus préférentiellement utilisé pour constituer une nappe droit fil 3 dont la largeur frontale W3 dépassera 75% de la largeur d'entrée de coupeuse W8, et sera préférentiellement comprise entre 80 % et 100%, voire entre 90% et 100% de ladite largeur d'entrée de coupeuse W8.

On pourra envisager de préparer puis d'abouter au sein d'une même nappe droit fil 3, conformément à l'invention, des bandelettes droit fil 7, 107, 207 de largeurs frontales W7, W107, W207 différentes, et/ou qui présentent des structures ou des compositions différentes, notamment selon la géométrie et les propriétés que l'on souhaite conférer à la nappe droit fil 3.

Ceci étant, selon une possibilité de l'invention, la majorité des bandelettes droit fil 7, 107, 207, c'est-à-dire plus de la moitié du nombre entier de bandelettes droit fil 7, 107, 207 qui sont aboutées pour constituer la nappe droit fil 3, présentent une même largeur frontale W7, W107, W207.

De façon particulièrement préférentielle, la totalité des bandelettes droit fil 7, 107, 207 qui sont aboutées pour constituer la nappe droit fil 3 présentent une même largeur frontale W7, W107, W207.

Ceci permet notamment, ici encore, de rationnaliser la production des bandelettes droit fil 7, 107, 207, puisque toutes les bandelettes droit fil d'une même largeur frontale peuvent avantageusement être issues d'une même calandre 10.

En outre, on pourra ainsi homogénéiser les stocks de fil de renfort 4 et, le cas échéant, les stocks de bobines 6, 106, 206 et de bandelettes droit fil 7, 107, 207.

Selon une caractéristique préférentielle qui peut constituer une invention en tant que telle, lors de l'étape (a) de préparation, on approvisionne une calandre 10 avec une ou des bobines de fils de renfort 11 qui contiennent autant de fils de renfort 4 distincts que nécessaire pour couvrir une largeur frontale W7, W107, W207 souhaitée d'une bandelette droit fil, lesdites bobines de fil de renfort 11 étant choisies de telle sorte que la longueur L4_base de chaque fil de renfort 4 initialement stocké sur ladite ou lesdites bobines de fil de renfort 11, dite « longueur de stockage nominale » L4_base, est identique, avec une tolérance prédéterminée inférieure ou égale à 20%, voire égale ou inférieure à 5%, voire inférieure ou égale à 1%, d'un fil de renfort 4 à l'autre, et, lors d'une opération de calandrage, on produit sur ladite calandre 10, à partir desdits fils de renfort 4, une bandelette droit fil continue, dite « bandelette droit fil brute » 12, qui possède la largeur frontale W12 souhaitée et une longueur dite « longueur brute » L12 qui est égale à au moins 80%, de préférence à au moins 90%, à au moins 95%, à au moins 99%, voire à 100% de la longueur nominale de stockage L4_base, puis l'on répartit ladite bandelette droit fil brute 12 en plusieurs bobines distinctes 6, 106, 206 de bandelettes droit fil 7, 107, 207, que l'on utilise ensuite conjointement lors de l'étape (b) d'aboutage.

On a ainsi :
W7 = W107 = W207 = W12 et
L12 = L7 + L107 + L207 + ..., c'est-à-dire que la longueur cumulée des bandelettes droit fil 7, 107, 207 réparties sur les bobines 6, 106, 206 correspond sensiblement à la longueur totale L12 de la bandelette droit fil brute 12 dont lesdites bandelettes droit fil 7, 107, 207 sont issues.

Avantageusement, en visant une longueur L12 de bandelette droit fil brute 12 proche de, voire égale à, la longueur du fil de renfort 4 en stock sur chacune des bobines de fil de renfort 11, l'invention permet d'épuiser le fil de renfort 4 chargé sur la calandre 10 en une seule et même campagne de calandrage.

On peut ainsi produire, sans gaspillage de temps de préparation ni de matière première, une bandelette droit fil brute 12 continue, dont la surface totale correspond au produit de la largeur frontale W12 de ladite bandelette droit fil brute 12 par sa longueur L12, c'est-à-dire correspond sensiblement au produit de la largeur W12 par la longueur de stockage de fil de renfort L4_base.

De préférence, cette surface utile de bandelette droit fil brute sera égale ou sensiblement égale à la surface de nappe droit fil 3 nécessaire pour la réalisation de l'ensemble des laizes 1 de la série de pneumatiques visée.

Avantageusement, la redistribution de la bandelette droit fil brut 12 en une pluralité de bandelettes droit fil 7, 107, 207 correspondant à des tronçons de longueur de ladite bandelette droit fil brute 12, affectées à des bobines 6, 106, 206 distinctes, permet de convertir la fabrication de la surface nécessaire de nappe droit fil 3 en une fabrication adaptée à la longueur de stockage L4_base des fils de renfort 4.

A titre préférentiel, la longueur de stockage nominale L4_base de chaque fil de renfort stocké sur la ou les bobines de fil de renfort 11 utilisées par la calandre est comprise entre 200 m et 70 0000 m, de préférence entre 1 000 m, ou 2 000 m, d'une part (valeur basse) et 35 000 m d'autre part (valeur haute).

De telles longueurs de stockage nominales L4_base correspondent en effet à des standards de stockage, ce qui permet de simplifier l'approvisionnement de la calandre 10.

En outre, l'importante longueur nominale de stockage L4_base des fils de renfort 4 permet de calandrer en continu une longueur L12 importante de bandelette droit fil brute 12, sensiblement égale à la longueur nominale de stockage L4_base, et ainsi de réaliser, dans la majeure partie des cas concrets, la totalité de la surface utile de nappe droit fil 3 nécessaire à la fabrication d'une série de plusieurs pneumatiques 20 à partir d'une seule bandelette droit fil brute 12, et donc à partir d'une seule et même opération de calandrage.

De préférence, au cours de l'étape (a) de préparation, chacune des bobines 6, 106, 206 distinctes reçoit une portion de la bandelette droit fil brute 12 d'une longueur L7, L107, L207 qui est comprise entre 5% et 50% de la longueur brute L12, et par exemple, de préférence, entre 5% et 25% de ladite longueur brute L12.

Comme indiqué plus haut, on peut ainsi transférer et répartir la bandelette droit fil brute 12, de préférence de manière sensiblement égale entre les différentes bobines 6, 106, 206, en autant de bandelettes droit fil 7, 107, 207 de longueur unitaire L7, L107, L207 suffisante pour produire la longueur L3 de nappe droit fil 3 souhaitée.

En l'occurrence, on a de préférence sensiblement L7 = L107 = L207, et de façon encore plus préférentielle sensiblement L3 = L7 = L107 = L207.

Bien entendu, la longueur unitaire L7, L107, L207 de chaque bandelette droit fil 7, 107, 207 pourra être déterminée de sorte à correspondre sensiblement à la capacité maximale du poste d'aboutage 21, et/ou respectivement à la capacité maximale de la coupeuse 8, qui définit le poids et/ou le volume maximal des bobines 6, 106, 206, respectivement 22, que peut accueillir et dérouler le poste d'aboutage 21, respectivement la coupeuse 8.

En particulier, selon une caractéristique préférentielle qui peut constituer une invention à part entière, la surface totale des laizes 1 à produire, dite surface utile de laize, est générée, au cours de l'étape (a) de préparation, par une seule et même opération de calandrage d'une bandelette droit fil brute 12 dont la surface développée est comprise entre 100 % et 120 % de ladite surface utile de laize.

On peut alors répartir sensiblement également ladite bandelette droit fil brute 12 en un nombre prédéterminé de bobines distinctes, de préférence compris entre 2 et 10, qui reçoivent chacune une fraction correspondante de la surface développée de la bandelette droit fil brute 12, puis utiliser conjointement l'ensemble desdites bobines 6, 106, 206 lors de l'étape (b) d'aboutage.

Ledit nombre de bobines 6, 106, 206 prédéterminé est de préférence égal au nombre de bandelettes droit fil 7, 107, 207 qu'il est nécessaire d'abouter de front pour atteindre la largeur souhaitée W3 de la nappe droit fil 3.

De préférence, chaque bobine 6, 106, 206 de la pluralité de bobines distinctes que l'on prépare lors de l'étape (a) de préparation puis que l'on utilise conjointement avec les autres bobines 6, 106, 206 lors de l'étape (b) d'aboutage, contient une bandelette droit fil 7, 107, 207 continue dont la longueur L7, L107, L207 est comprise entre 200 m et 30 000 m.

Avantageusement, on peut ainsi exploiter chaque bandelette droit fil 7, 107, 207 pour réaliser une nappe droit fil 3 de longueur importante, suffisante pour réaliser plusieurs laizes 1, et plus préférentiellement suffisante pour réaliser plusieurs nappes de renfort 2, et plus particulièrement un nombre (et une surface) de nappes de renfort 2 suffisant pour réaliser plusieurs, voire la totalité, des pneumatiques 20 de la série visée.

Par ailleurs, selon une caractéristique préférentielle qui peut constituer une invention en tant que telle, et tel que cela est illustré sur la figure 4, si la direction de coupe C8 (souhaitée) forme un angle de coupe a2 par rapport à la direction longitudinale commune X3 de la nappe droit fil 3, alors, lors de l'initialisation de l'étape (b) d'aboutage, on peut avantageusement présenter en escalier les bandelettes droit fil 7, 107, 207 issues des bobines 6, 106, 206 distinctes, en décalant longitudinalement les fronts 7F, 107F, 207F respectifs desdites bandelettes droit fil les uns par rapport aux autres selon un pas de décalage longitudinal X_offset qui dépend de la valeur de l'angle de coupe a2.

Plus particulièrement, tel que cela est illustré sur la figure 4, le pas de décalage longitudinal X_Offset pourra être défini en fonction de la largeur frontale W7, W107, W207 de chaque bandelette droit fil et de l'angle de coupe a2.

Ledit pas de décalage longitudinal X_Offset sera de préférence choisi de telle sorte que le point d'intersection de chaque nouveau front de bandelette 107F avec la lisière de la bandelette 7 voisine, dont le front 7F devance le front 107F considéré par rapport à la coupeuse 8, est situé sur la ligne de coupe C8, ladite ligne de coupe C8 étant orientée selon l'angle de coupe a2 par rapport à la direction longitudinale commune X3, et donc par rapport aux lisières des bandelettes.

En d'autres termes, le pas de décalage longitudinal X_Offset est choisi de sorte que la pente de l'escalier coïncide avec la direction de coupe C8.

Bien entendu, s'il existe une variété de dimensions entre les différentes bandelettes droit fil 7, 107, 207, on pourra choisir de définir un pas de décalage longitudinal X_Offset différent d'une bandelette droit fil 7 à l'autre 107.

En variante, il est parfaitement envisageable, par exemple pour faciliter l'aboutage des bandelettes droit fil 7, 107, 207 sans avoir besoin de répartir les fronts 7F, 107F, 207F des bandelettes droit fil 7, 107, 207 sur une longueur trop importante, de choisir un pas de décalage longitudinal X_Offset qui corresponde à un angle dit « angle moyen » qui n'est pas exactement égal à l'angle de coupe a2, mais qui correspond à un angle arbitrairement choisi par l'utilisateur de la coupeuse, dont l'orientation dépend de l'orientation de l'angle de coupe a2, dont la valeur est de préférence proche de la valeur de l'angle de coupe a2, et dont ladite valeur peut par exemple être (légèrement) inférieure, ou au contraire (légèrement) supérieure, en valeur absolue, à la valeur dudit angle de coupe.

Dans tous les cas, la distribution en escalier des fronts des bandelettes droit fil permettra avantageusement de limiter les chutes de matière, qui sont perdues lors de la première coupe exécutée par la coupeuse 8 sur la nappe droit fil 3.

Par ailleurs, selon une variante de réalisation préférentielle qui peut constituer une invention à part entière, et ce notamment de manière indépendante, le cas échéant, des dimensions des bandelettes droit fil 7, 107, 207 et/ou des dimensions de la nappe droit fil 3 ou d'une quelconque relation entre lesdites dimensions et une largeur de coupeuse W8, on peut prévoir que, lors de l'étape (b) d'aboutage, on dispose les bandelettes droit fil 7, 107, 207 parallèlement deux à deux, de manière à ce que lesdites bandelettes droit fil présentent, en vis-à-vis l'une de l'autre, leurs lisières 7L, 107L respectives et à ce que lesdites lisières 7L, 107L soient distantes l'une de l'autre et délimitent entre elles un interstice dit « interstice de jonction » 30 de largeur W30 prédéterminée, et l'on peut alors abouter lesdites bandelettes droit fil 7, 107 en injectant dans l'interstice de jonction 30 un matériau de comblement 31 malléable, de type gomme ou colle, qui assure le collage de la lisière 7L de l'une des bandelettes droit fil 7 avec la lisière 107L de l'autre bandelette droit fil 107, tel que cela est illustré sur la figure 5.

Avantageusement, l'utilisation d'un matériau de comblement 31 malléable, qui s'adapte en forme et en volume à la largeur W30 de l'interstice de jonction 30, sans imposer lui-même de contrainte dimensionnelle d'écartement entre les bandelettes 7, 107, permet de réaliser un aboutage dans lequel on maîtrise très précisément l'écartement entre deux bandelettes droit fil 7, 107 voisines, et plus particulièrement dans lequel on maîtrise très précisément le pas d'écartement d31 (mesuré de centre à centre) entre les deux fils de renfort 4, appartenant chacun à l'une des bandelettes aboutées, qui sont mutuellement les plus proches.

On notera à ce titre que, de préférence, la largeur W30 de l'interstice de jonction 30 sera choisie de telle sorte que le pas d'écartement d31 entre les deux fils de renfort 4 les plus proches, qui appartiennent à deux bandelettes droit fil 7, 107 distinctes et qui se situent en vis-à-vis l'un de l'autre, de part et d'autre de l'interstice de jonction 30, soit égal au pas d7, d107 selon lequel les fils de renfort 4 sont ordonnés en largeur dans au moins l'une des deux bandelettes droit fil 7, 107 considérées, et de préférence dans chacune des deux bandelettes droit fil 7, 107 considérées.

Ainsi, en référence à la dernière coupe de la figure 5, on aura de préférence d31 = d7, ou d31 = d107, et de préférence, si d7 = d107, d31 = d7 = d107.

Le cas échéant, le matériau de comblement 31 pourra présenter une ou des propriétés distinctes des gommes 5 des bandelettes droit fil 7, 107.

En particulier, on pourra prévoir que le matériau de comblement 31 présente une conductivité électrique supérieure à celle des gommes 5.

A titre indicatif, la ou les gommes 5 des bandelettes droit fil pourront être faiblement conductrices d'électricité, et par exemple présenter une résistivité égale ou supérieure à 10⁸ Ohms/cm (100 MΩ/cm), tandis que le matériau de comblement 31 pourra présenter une résistivité inférieure à 10⁶ Ohms/cm (1 MΩ/cm).

On pourra ainsi créer, à travers l'épaisseur de la nappe droit fil 3 qui résulte de l'aboutage, un chemin conducteur qui permettra avantageusement d'éviter, lorsque le véhicule roule, l'accumulation de charges électriques, en assurant l'évacuation desdites charges électriques à travers le pneumatique 20.

De même, on pourra choisir un matériau de comblement 31 qui présente des propriétés mécaniques, notamment une résistance à la traction, distinctes de celles des gommes 5 des bandelettes droit fil 7, 107, afin d'ajuster les propriétés de la nappe droit fil 3 composite obtenue par l'aboutage.

Le matériau de comblement 31 pourra être dispensé par tout procédé adapté qui garantira la malléabilité du matériau de comblement 31, ainsi qu'un dosage approprié (en volume ou en poids par unité de temps) dudit matériau.

On pourra notamment utiliser à cet effet un procédé d'extrusion.

Selon une caractéristique préférentielle qui peut constituer une invention à part entière, en particulier si au moins l'une des bandelettes droit fil 7, 107, 207 contient des fils de renfort 4 métalliques, et de préférence si au moins deux des bandelettes droit fil 7, 107, 207 contiennent des fils de renfort 4 métalliques, on pourra, lors de l'étape (a) de préparation ou lors de l'étape (b) d'aboutage, araser au moins une lisière 7L, 107L de ladite, ou respectivement desdites, bandelettes droit fil destinées à faire l'objet du collage par le matériau de comblement 31, en faisant défiler ladite bandelette droit fil, respectivement lesdites bandelettes droit fil 7, 107, 207 au contact d'un couteau 32 qui vient en appui glissant contre le fil de renfort 4, de préférence métallique, qui est le plus proche de la lisière 7L, 10L considérée, de manière à ce que le mouvement relatif de la, respectivement des, bandelettes droit fil 7, 107 par rapport au couteau 32 permette d'éliminer, avant aboutage, une éventuelle largeur résiduelle de gomme 5 qui recouvre le fil de renfort 4, et ce afin de mettre à nu le fil de renfort 4, de préférence métallique, sur la longueur de la lisière 7L, 107L considérée, tel que cela est illustré sur la figure 5, de sorte que la limite latérale dudit fil de renfort 4, de préférence métallique, délimite l'interstice de jonction 30 qui reçoit le matériau de comblement 31.

On notera que cet arasage au couteau 32 peut être réalisé soit en sortie de calandre, de sorte à pré-araser les bandelettes droit fil 7, 107, 207 avant leur stockage sur les bobines 6, 106, 206, soit, de préférence, en entrée du poste d'aboutage 21, lorsque l'on déroule lesdites bandelettes droit fil 7, 107, 207 pour les abouter.

On notera à ce titre que, par rapport à un arasage anticipé réalisé sur la calandre 10, la solution d'un arasage sur le poste d'aboutage 21 permet avantageusement de réduire les risques que le fil de renfort 4 dénudé soit dégradé par la corrosion ou bien se détache de la bandelette droit fil 7, 107 lors de la manutention de ladite bandelette droit fil ou de l'acheminement de ladite bandelette droit fil au sein du poste d'aboutage 21.

Avantageusement, l'application du couteau 32 directement contre le fil de renfort 4, tangentiellement à ce dernier, en exerçant une pression latérale du couteau 32 contre la lisière 7, 107 de la bandelette, tandis que la bandelette droit fil 7, 107 défile selon sa direction longitudinale X7, X107, permet de guider la lame du couteau 32 et de racler et peler sans effort l'éventuel surplus de gomme 5 qui recouvre latéralement ledit fil de renfort 4.

Avantageusement, le couteau 32 pourra être fixe par rapport au bâti de la machine (calandre 10 ou poste d'aboutage 21), sans être animé d'une vitesse de coupe propre, ce qui simplifiera la mise en place et le réglage de la position de coupe dudit couteau.

Eventuellement, le couteau 32, bien que de préférence fixe, pourra être rappelé mécaniquement contre la bandelette droit fil 7, 107 au moyen d'un organe élastique, par exemple de type ressort, ou bien au moyen d'un organe motorisé convenablement piloté, du genre vérin.

Avantageusement, le fait d'araser les lisières 7L, 107L au couteau 32 permet d'obtenir des bordures de bandelettes droit fil 7, 107 très nettes, ce qui favorise la précision du positionnement desdites bandelettes droit fil lors de l'aboutage, en particulier lorsque chacune des deux bandelettes droit fil est arasée le long de la lisière qui permet sa jonction avec l'autre bandelette droit fil.

En particulier, on pourra ainsi définir de manière reproductible la largeur W30 de l'interstice de jonction 30 qu'il conviendra de prévoir pour respecter le pas d'écartement d31 entre les deux fils de renfort 4 bordant la jonction entre les bandelettes droit fil 7, 107, et en particulier pour assurer la continuité du pas d7, d31, d107 entre les bandelettes droit fil 7, 107 au passage de ladite jonction.

Le cas échéant, lorsque l'on associe une ou des bandelettes droit fil 7, 107, 207 qui contiennent des fils de renfort 4 conducteurs d'électricité, et notamment des fils de renfort 4 métalliques, avec l'utilisation d'un matériau de comblement 31 qui est meilleur conducteur électrique que les gommes 5 desdites bandelettes, un arasage au couteau 32 permet de mettre ledit matériau de comblement 31 au contact d'au moins un fil de renfort 4 conducteur, ou de préférence au contact des deux fils de renfort 4 conducteurs qui bordent l'interstice de jonction 30, ce qui améliore la qualité du chemin conducteur pour acheminer les charges électriques dans le sens axial des fils de renfort 4 et de la jonction.

Ceci est particulièrement appréciable si la nappe droit fil 3 est destinée à former une nappe carcasse radiale, car on peut alors utiliser les fils de renfort 4 pour transporter les charges électriques de la tête et des flancs du pneumatique jusqu'à la jante ou inversement.

Le cas échéant, le principe de l'arasage pourra être appliqué à tout type de fil de renfort 4, y compris non métallique, à condition que ledit fil de renfort 4 présente une résistance suffisante à l'abrasion vis-à-vis du couteau 32 choisi.

Bien entendu, l'invention n'est nullement limitée aux seules variantes de réalisation décrites dans ce qui précède, l'homme du métier étant notamment à même d'isoler ou de combiner librement entre elles l'une ou l'autre des caractéristiques susmentionnées, ou de leur substituer des équivalents.

A ce titre, l'invention porte notamment sur tout ou partie d'une partie d'une installation telle que celle représentée sur les figures 2A et 2B.

En particulier, l'invention concerne une installation de fabrication de laizes 1 comprenant, tel que cela est illustré sur la figure 2B :
- un poste de déroulage agencé pour accueillir plusieurs bobines 6, 106, 206 distinctes contenant chacune une bandelette droit fil 7, 107, 207 formée d'une pluralité de fils de renfort 4 continus qui sont noyés dans au moins une couche de gomme 5 et qui s'étendent parallèlement entre eux selon la direction longitudinale X7, X107, X207 de ladite bandelette, et pour dérouler simultanément lesdites bandelettes droit fil 7, 107, 207,
- ainsi qu'un poste d'aboutage 21 qui permet d'abouter deux à deux lesdites bandelettes droit fil 7, 107, 207 selon une même direction longitudinale commune X3, de sorte à réunir l'ensemble desdites bandelettes droit fil en une nappe droit fil 3, dont les fils de renfort 4 s'étendent selon la direction longitudinale commune X3, et qui présente, perpendiculairement auxdits fils de renfort 5, une largeur frontale W3 de nappe droit fil qui est supérieure à la largeur frontale W7, W107, W207 individuelle de chaque bandelette droit fil,
- et une coupeuse 8 selon l'invention.

Cette installation pourra avantageusement être dimensionnée selon l'une quelconque des configurations ou combinaisons de configurations décrites dans ce qui précède.

Plus particulièrement, dès lors que la coupeuse 8 possède une largeur d'entrée W8 déterminée, le poste de déroulage, notamment la taille des bobines 6, 106, 206 et/ou la taille des supports de bobines, ainsi que le poste d'aboutage, seront de préférence agencés de manière à pouvoir produire, à partir de bandelettes droit fil 7, 107, 207 dont la plus large présente une largeur frontale W7, W107, W207 inférieure ou égale à 50%, de préférence inférieure ou égale à 40%, préférentiellement inférieure ou égale à 25%, éventuellement, de préférence, inférieure ou égale à 10%, voire inférieure ou égale à 5 % de ladite largeur d'entrée de coupeuse W8, une nappe droit fil 3 dont la largeur frontale W3 est égale ou supérieure à 50%, de préférence égale ou supérieure à 75%, préférentiellement égale ou supérieure à 80%, voire égale ou supérieure à 90% de la largeur d'entrée de coupeuse W8.

Plus préférentiellement, on pourra dimensionner l'installation de sorte à produire une nappe droit fil 3 de largeur frontale comprise entre 80% et 100% de la largeur d'entrée de coupeuse W8, à partir de bandelettes droit fil 7, 107, 207 de largeur frontale W7, W107, W207 inférieure ou égale à 40% de la largeur d'entrée de coupeuse W8, et de préférence comprise entre 5% et 20% de ladite largeur d'entrée de coupeuse W8.

Enfin, l'invention concerne également en tant que tel un sous-ensemble de l'installation susmentionnée, tel qu'illustré sur la figure 1, ledit sous-ensemble comprenant un poste de déroulage agencé pour accueillir plusieurs bobines 6, 106, 206 distinctes contenant chacune une bandelette droit fil 7, 107, 207 et pour assurer le déroulage desdites bandelettes droit fil 7, 107, 207, un poste d'aboutage 21, et un poste de sortie permettant de stocker sur une bobine tampon 22 la nappe droit fil 3 issue du poste d'aboutage 21.

Comme indiqué plus haut, on peut ainsi stocker, avant toute opération de coupe en laizes 1, ici directement après aboutage, la nappe droit fil 3 sur une bobine tampon 22, située en amont de la coupeuse 8, puis utiliser ultérieurement ladite nappe droit fil 3 dans une coupeuse 8 selon l'invention, en déroulant ladite nappe droit fil 3 depuis ladite bobine tampon 22 pour acheminer ladite nappe droit fil 3 jusqu'à ladite coupeuse 8.

De préférence, tel que cela est illustré sur la figure 1, le poste de déroulage sera pourvu d'un dispositif de récupération permettant de récupérer, de préférence sur des bobineaux, les intercalaires 23 utilisés pour stocker les bandelettes droit fil 7, 107, 207 sur les bobines 6, 106, 206.

De même, le poste de sortie sera de préférence pourvu d'un dispositif d'alimentation agencé pour fournir un intercalaire 24 de largeur adaptée à la nappe droit fil 3, que l'on enroulera avec ladite nappe droit fil 3 sur la bobine tampon 22.

## Revendications

1. Procédé de fabrication de laizes (1) destinées à entrer dans la constitution d'une nappe de renfort (2) pour bandage (20), de préférence pour bandage pneumatique (20), ledit procédé comprenant les étapes suivantes :
(i) une étape (a) de préparation au cours de laquelle on prépare plusieurs bobines (6, 106, 206) distinctes contenant chacune une bandelette, dite « bandelette droit fil » (7, 107, 207), qui est formée d'une pluralité de fils de renfort (4) continus qui sont noyés dans au moins une couche de gomme (5) et qui s'étendent parallèlement entre eux selon la direction longitudinale (X7, X107, X207) de ladite bandelette, chacune desdites bandelettes droit fil (7, 107, 207) présentant, perpendiculairement à ses fils de renfort, une largeur dite « largeur frontale » (W7, W107, W207) prédéterminée ; puis
(ii) une étape (b) d'aboutage, au cours de laquelle on déroule simultanément les bandelettes droit fil (7, 107, 207) contenues sur lesdites plusieurs bobines (6, 106, 206) distinctes, et l'on aboute deux à deux lesdites bandelettes droit fil (7, 107, 207) selon une même direction longitudinale commune (X3), de sorte à réunir l'ensemble desdites bandelettes droit fil en une nappe droit fil (3), dont les fils de renfort (4) s'étendent selon la direction longitudinale commune (X3), et qui présente, perpendiculairement auxdits fils de renfort (5), une largeur frontale (W3) de nappe droit fil qui est supérieure à la largeur frontale (W7, W107, W207) individuelle de chaque bandelette droit fil, puis
(iii) une étape (c) de coupe, au cours de laquelle on engage la nappe droit fil (3) dans une coupeuse (8) qui possède une capacité de coupe maximale déterminée, dite « largeur d'entrée de coupeuse » (W8), qui correspond à la plus grande largeur frontale d'une nappe droit fil (3) que l'on peut engager en entrée de ladite coupeuse (8), puis, au moyen de ladite coupeuse, on sectionne transversalement, à plusieurs reprises, la nappe droit fil (3) selon une direction de coupe (C8) qui est sécante à la direction des fils de renfort (4), de manière à former des tronçons de nappe droit fil dits « laizes » (1) de longueur (L1) prédéterminée ;
ledit procédé étant **caractérisé en ce que** la largeur frontale (W3) de la nappe droit fil (3) qui est produite lors de l'étape (b) d'aboutage puis engagée dans la coupeuse (8) lors de l'étape (c) de coupe est égale ou supérieure à 50%, de préférence égale ou supérieure à 75%, préférentiellement égale ou supérieure à 80%, voire égale ou supérieure à 90% de la largeur d'entrée de coupeuse (W8), tandis que la largeur frontale (W7, W107, W207) de la plus large des bandelettes droit fil qui sont aboutées pour confectionner ladite nappe droit fil (3) est inférieure ou égale à 50%, de préférence inférieure ou égale à 40%, préférentiellement inférieure ou égale à 25%, éventuellement, de préférence, inférieure ou égale à 10%, voire inférieure ou égale à 5 % de ladite largeur d'entrée de coupeuse (W8).

2. Procédé selon la revendication 1 **caractérisé en ce que**, lors de l'étape (a) de préparation, on approvisionne une calandre (10) avec une ou des bobines de fils de renfort (11) qui contiennent autant de fils de renfort (4) distincts que nécessaire pour couvrir une largeur frontale (W7, W107, W207) souhaitée d'une bandelette droit fil (7, 107, 207), **en ce que** la longueur de chaque fil de renfort initialement stocké sur ladite ou lesdites bobines de fil de renfort, dite « longueur de stockage nominale » (L4_base), est identique, avec une tolérance prédéterminée inférieure ou égale à 20%, d'un fil de renfort (4) à l'autre, et **en ce que**, lors d'une opération de calandrage, on produit sur ladite calandre (10), à partir desdits fils de renfort, une bandelette droit fil continue dite « bandelette droit fil brute » (12) qui possède la largeur frontale (W12) souhaitée et une longueur dite « longueur brute » (L12) qui est égale à au moins 80%, de préférence à au moins 90%, à au moins 95%, à au moins 99%, voire à 100% de la longueur nominale de stockage, puis l'on répartit ladite bandelette droit fil brute (12) en plusieurs bobines (6, 106, 206) distinctes de bandelettes droit fil (7, 107, 207) que l'on utilise ensuite conjointement lors de l'étape (b) d'aboutage.

3. Procédé selon la revendication 2 **caractérisé en ce que**, au cours de l'étape (a) de préparation, chacune des bobines distinctes (6, 106, 206) reçoit une portion de la bandelette droit fil brute (12) d'une longueur (L7, L107, L207) comprise entre 5% et 50% de la longueur brute (L12).

4. Procédé selon la revendication 2 ou 3 **caractérisé en ce que** la longueur de stockage nominale (L4_base) de chaque fil de renfort (4) stocké sur la ou les bobines de fil de renfort (11) utilisées par la calandre (10) est comprise entre 200 m et 70 000 m, de préférence entre 1 000 m et 35 000 m.

5. Procédé selon l'une des revendications précédentes **caractérisé en ce que** chaque bandelettes droit fil (7, 107, 207) utilisée présente une largeur frontale (W7, W107, W207) comprise entre 5% et 20% de la largeur d'entrée de coupeuse (W8).

6. Procédé selon l'une des revendications précédentes **caractérisé en ce que** les bandelettes droit fil (7, 107, 207) ont chacune une largeur frontale (W7, W107, W207) comprise entre 30 mm et 700 mm, de préférence comprise entre 40 mm et 200 mm.

7. Procédé selon l'une des revendications précédentes **caractérisé en ce que** la largeur d'entrée de coupeuse (W8) est comprise entre 300 mm et 2 000 mm, de préférence entre 700 mm et 1 600 mm, et par exemple égale à 800 mm, à 1 000 mm, à 1 200 mm, à 1 400 mm ou à 1 600 mm.

8. Procédé selon l'une des revendications précédentes **caractérisé en ce que** chaque bobine (6, 106, 206) de la pluralité de bobines distinctes que l'on prépare lors de l'étape (a) de préparation puis que l'on utilise conjointement avec les autres bobines lors de l'étape (b) d'aboutage, contient une bandelette droit fil (7, 107, 207) continue dont la longueur (L7, L107, L207) est comprise entre 200 m et 30 000 m.

9. Procédé selon l'une des revendications précédentes **caractérisé en ce que** la surface totale des laizes (1) à produire, dite surface utile de laize, est générée, au cours de l'étape (a) de préparation, par une seule et même opération de calandrage d'une bandelette droit fil brute (12) dont la surface développée est comprise entre 100 % et 120 % de ladite surface utile de laize, et **en ce que** l'on répartit sensiblement également ladite bandelette droit fil brute (12) en un nombre prédéterminé de bobines (6, 106, 206) distinctes, de préférence compris entre 2 et 10, qui reçoivent chacune une fraction correspondante de la surface développée de la bandelette droit fil brute, puis l'on utilise conjointement l'ensemble desdites bobines (6, 106, 206) lors de l'étape (b) d'aboutage.

10. Procédé selon l'une des revendications précédentes **caractérisé en ce que** la direction de coupe (C8) forme un angle de coupe (α2) par rapport à la direction longitudinale commune (X3) de la nappe droit fil (3), et **en ce que**, lors de l'initialisation de l'étape (b) d'aboutage, on présente en escalier les bandelettes droit fil (7, 107, 207) issues des bobines (6, 106, 206) distinctes, en décalant longitudinalement les fronts respectifs (7F, 107F, 207F) desdites bandelettes droit fil les uns par rapport aux autres selon un pas de décalage longitudinal (X offset) qui dépend de la valeur de l'angle de coupe (α2).

11. Procédé selon l'une des revendications précédentes **caractérisé en ce que**, lors de l'étape (b) d'aboutage, on dispose les bandelettes droit fil (7, 107, 207) parallèlement deux à deux, de manière à ce que lesdites bandelettes droit fil présentent, en vis-à-vis l'une de l'autre, leurs lisières (7L, 107L) respectives et à ce que lesdites lisières soient distantes l'une de l'autre et délimitent entre elles un interstice dit « interstice de jonction » (30) de largeur (W30) prédéterminée, et **en ce que** l'on aboute lesdites bandelettes droit fil (7, 107) en injectant dans l'interstice de jonction (30) un matériau de comblement (31) malléable, de type gomme ou colle, qui assure le collage de la lisière (7L) de l'une des bandelettes droit fil (7) avec la lisière (107L) de l'autre bandelette droit fil (107).

12. Procédé selon la revendication 11 **caractérisé en ce que**, lors de l'étape (a) de préparation ou lors de l'étape (b) d'aboutage, on arase au moins une lisière (7L, 107L) de ladite ou respectivement desdites bandelettes droit fil destinées à faire l'objet du collage par le matériau de comblement (31), en faisant défiler ladite, respectivement lesdites, bandelettes droit fil (7, 107, 207) au contact d'un couteau (32) qui vient en appui glissant contre le fil de renfort (4) qui est le plus proche de la lisière considérée, de manière à ce que le mouvement relatif des bandelettes droit fil (7, 107) par rapport au couteau (32) permette d'éliminer, avant aboutage, une éventuelle largeur résiduelle de gomme (5) qui recouvre le fil de renfort (4), et ce afin de mettre à nu le fil de renfort (4) sur la longueur de la lisière (7L, 7F) considérée, de sorte que la limite latérale dudit fil de renfort (4) délimite l'interstice de jonction (30) qui reçoit le matériau de comblement (31).

13. Procédé selon la revendication 12 **caractérisé en ce que** au moins l'une, et de préférence au moins deux, des bandelettes droit fil (7, 107, 207) contiennent des fils de renfort (4) métalliques, de sorte que, lors de l'étape (a) de préparation ou lors de l'étape (b) d'aboutage, on arase au moins une lisière (7L, 107L) de ladite ou respectivement desdites bandelettes droit fil destinées à faire l'objet du collage par le matériau de comblement (31), en faisant défiler ladite, respectivement lesdites, bandelettes droit fil (7, 107, 207) au contact d'un couteau (32) qui vient en appui glissant contre le fil de renfort (4) métallique qui est le plus proche de la lisière considérée, de manière à ce que le mouvement relatif des bandelettes droit fil (7, 107) par rapport au couteau (32) permette d'éliminer, avant aboutage, une éventuelle largeur résiduelle de gomme (5) qui recouvre le fil de renfort (4) métallique, et ce afin de mettre à nu le fil de renfort (4) métallique sur la longueur de la lisière (7L, 7F) considérée, de sorte que la limite latérale dudit fil de renfort (4) métallique délimite l'interstice de jonction (30) qui reçoit le matériau de comblement (31)

## Patentansprüche

1. Verfahren zur Herstellung von Bahnen (1), die dazu bestimmt sind, in den Aufbau einer Verstärkungslage (2) für Reifen (20), bevorzugt für Luftreifen (20), einzugehen, wobei das Verfahren die folgenden Schritte umfasst:
(i) einen Vorbereitungsschritt (a), in dessen Verlauf mehrere getrennte Spulen (6, 106, 206) vorbereitet werden, die jeweils einen Streifen, "Gelegestreifen" (7, 107, 207) genannt, enthalten, der aus einer Mehrzahl von endlosen Verstärkungsfäden (4) gebildet ist, die in mindestens eine Gummischicht (5) eingebettet sind und die sich in Längsrichtung (X7, X107, X207) des Streifens parallel zueinander erstrecken, wobei jeder der Gelegestreifen (7, 107, 207) senkrecht zu seinen Verstärkungsfäden eine vorbestimmte Breite, "stirnseitige Breite" (W7, W107, W207) genannt, aufweist, dann
(ii) einen Fügeschritt (b), in dessen Verlauf die auf den mehreren getrennten Spulen (6, 106, 206) enthaltenen Gelegestreifen (7, 107, 207) gleichzeitig abgewickelt werden und die Gelegestreifen (7, 107, 207) entlang derselben gemeinsamen Längsrichtung (X3) gefügt werden, so dass alle Gelegestreifen zu einer Gelegelage (3) verbunden werden, deren Verstärkungsfäden (4) sich entlang der gemeinsamen Längsrichtung (X3) erstrecken und die, senkrecht zu den Verstärkungsfäden (5), eine stirnseitige Breite (W3) der Gelegelage aufweist, die größer als die einzelne stirnseitige Breite (W7, W107, W207) jedes Gelegestreifens ist, dann
(iii) einen Schneidschritt (c), in dessen Verlauf die Gelegelage (3) in eine Schneidemaschine (8) eingeführt wird, die eine bestimmte maximale Schneidkapazität, "Schneidemaschineneinlaufbreite" (W8) genannt, besitzt, die der größten stirnseitigen Breite einer Gelegelage (3) entspricht, die im Einlauf der Schneidemaschine (8) eingeführt werden kann, dann die Gelegelage (3) mittels der Schneidemaschine mehrfach entlang einer Schneidrichtung (C8) zerteilt wird, die die Richtung der Verstärkungsfäden (4) schneidet, so dass Gelegelagenabschnitte, "Bahnen" (1) genannt, von vorbestimmter Länge (L1) gebildet werden;
wobei das Verfahren **dadurch gekennzeichnet ist, dass** die stirnseitige Breite (W3) der Gelegelage (3), die beim Fügeschritt (b) hergestellt wird und dann beim Schneideschritt (c) in die Schneidemaschine (8) eingeführt wird, größer oder gleich 50 %, bevorzugt größer oder gleich 75 %, vorzugsweise größer oder gleich 80 % oder sogar größer oder gleich 90 % der Schneidemaschineneinlaufbreite (W8) ist, während die stirnseitige Breite (W7, W107, W207) des breitesten der Gelegestreifen, die gefügt werden, um die Gelegelage (3) zu konfektionieren, kleiner oder gleich 50 %, bevorzugt kleiner oder gleich 40 %, vorzugsweise kleiner oder gleich 25 %, gegebenenfalls bevorzugt kleiner oder gleich 10 % oder sogar kleiner oder gleich 5 % der Schneidemaschineneinlaufbreite (W8) ist.

2. Verfahren nach Anspruch 1, **dadurch gekennzeichnet, dass** beim Vorbereitungsschritt (a) ein Kalander (10) mit einer oder mehreren Verstärkungsfadenspulen (11) bereitgestellt wird, die so viele getrennte Verstärkungsfäden (4) enthalten, wie erforderlich sind, um eine gewünschte stirnseitige Breite (W7, W107, W207) eines Gelegestreifens (7, 107, 207) zu bedecken, dass die Länge jedes anfänglich auf der oder den Verstärkungsfadenspulen gespeicherten Verstärkungsfadens, "Nennspeicherlänge" (L4_base) genannt, mit einer vorbestimmten Toleranz kleiner oder gleich 20 % von einem Verstärkungsfaden (4) zum anderen identisch ist, dass bei einem Kalandriervorgang auf dem Kalander (10) aus den Verstärkungsfäden ein endloser Gelegestreifen, "Gelegerohstreifen" (12) genannt, hergestellt wird, der die gewünschte stirnseitige Breite (W12) und eine Länge, "Rohlänge" (L12) genannt, besitzt, die mindestens 80 %, bevorzugt mindestens 90 %, mindestens 95 %, mindestens 99 % oder sogar 100 % der Nennspeicherlänge beträgt, dann der Gelegerohstreifen (12) auf mehrere getrennte Spulen (6, 106, 206) mit Gelegestreifen (7, 107, 207) verteilt wird, die anschließend beim Fügeschritt (b) gemeinsam verwendet werden.

3. Verfahren nach Anspruch 2, **dadurch gekennzeichnet, dass** im Verlauf des Vorbereitungsschritts (a) jede der getrennten Spulen (6, 106, 206) einen Abschnitt des Gelegerohstreifens (12) mit einer Länge (L7, L107, L207) zwischen 5 % und 50 % der Rohlänge (L12) aufnimmt.

4. Verfahren nach Anspruch 2 oder 3, **dadurch gekennzeichnet, dass** die Nennspeicherlänge (L4_base) jedes Verstärkungsfadens (4), der auf der oder den Verstärkungsfadenspulen (11) gespeichert ist, die vom Kalander (10) verwendet werden, zwischen 200 m und 70.000 m, bevorzugt zwischen 1.000 m und 35.000 m beträgt.

5. Verfahren nach einem der vorhergehenden Ansprüche, **dadurch gekennzeichnet, dass** jeder verwendete Gelegestreifen (7, 107, 207) eine stirnseitige Breite (W7, W107, W207) zwischen 5 % und 20 % der Schneidemaschineneinlaufbreite (W8) aufweist.

6. Verfahren nach einem der vorhergehenden Ansprüche, **dadurch gekennzeichnet, dass** die Gelegestreifen (7, 107, 207) jeweils eine stirnseitige Breite (W7, W107, W207) zwischen 30 mm und 700 mm, bevorzugt zwischen 40 mm und 200 mm haben.

7. Verfahren nach einem der vorhergehenden Ansprüche, **dadurch gekennzeichnet, dass** die Schneidemaschineneinlaufbreite (W8) zwischen 300 mm und 2.000 mm, bevorzugt zwischen 700 mm und 1.600 mm beträgt und beispielsweise gleich 800 mm, 1.000 mm, 1.200 mm, 1.400 mm oder 1.600 mm ist.

8. Verfahren nach einem der vorhergehenden Ansprüche, **dadurch gekennzeichnet, dass** jede Spule (6, 106, 206) der Mehrzahl von getrennten Spulen, die beim Vorbereitungsschritt (a) vorbereitet werden und die anschließend beim Fügeschritt (b) gemeinsam mit den anderen Spulen verwendet werden, einen endlosen Gelegestreifen (7, 107, 207) enthält, dessen Länge (L7, L107, L207) zwischen 200 m und 30.000 m beträgt.

9. Verfahren nach einem der vorhergehenden Ansprüche, **dadurch gekennzeichnet, dass** die herzustellende Gesamtfläche der Bahnen (1), Bahnnutzfläche genannt, im Verlauf des Vorbereitungsschritts (a) durch einen einzigen Kalandriervorgang zum Kalandrieren eines Gelegerohstreifens (12) erzeugt wird, dessen abgewickelte Fläche zwischen 100 % und 120 % der Bahnnutzfläche beträgt, der Gelegerohstreifen (12) im Wesentlichen gleich auf eine vorbestimmte Anzahl von getrennten Spulen (6, 106, 206), bevorzugt zwischen 2 und 10, verteilt wird, die jeweils einen entsprechenden Anteil der abgewickelten Fläche des Gelegerohstreifens aufnehmen, dann beim Fügeschritt (b) alle Spulen (6, 106, 206) gemeinsam verwendet werden.

10. Verfahren nach einem der vorhergehenden Ansprüche, **dadurch gekennzeichnet, dass** die Schneidrichtung (C8) einen Schneidwinkel (α2) in Bezug auf die gemeinsame Längsrichtung (X3) der Gelegelage (3) bildet und dass, bei der Initialisierung des Fügeschritts (b), die aus den getrennten Spulen (6, 106, 206) hervorgehenden Gelegestreifen (7, 107, 207) getreppt präsentiert werden, indem die jeweiligen Stirnseiten (7F, 107F, 207F) der Gelegestreifen in Längsrichtung gemäß einem Längsversatzschritt (X_offset) zueinander versetzt werden, der vom Wert des Schneidwinkels (α2) abhängt.

11. Verfahren nach einem der vorhergehenden Ansprüche, **dadurch gekennzeichnet, dass** beim Fügeschritt (b) die Gelegestreifen (7, 107, 207) paarweise parallel angeordnet werden, so dass die Gelegestreifen ihre jeweiligen Kanten (7L, 107L) einander zugewandt präsentieren, und dass die Kanten voneinander beabstandet sind und zwischen sich einen Zwischenraum, "Verbindungszwischenraum" (30) genannt, von vorbestimmter Breite (W30) begrenzen und dass die Gelegestreifen (7, 107) gefügt werden, indem in den Verbindungszwischenraum (30) ein verformbares Füllmaterial (31) vom Gummi- oder Klebstofftyp gespritzt wird, welches das Verkleben der Kante (7L) des einen der Gelegestreifen (7) mit der Kante (107L) des anderen Gelegestreifens (107) gewährleistet.

12. Verfahren nach Anspruch 11, **dadurch gekennzeichnet, dass** beim Vorbereitungsschritt (a) oder beim Fügeschritt (b) mindestens eine Kante (7L, 107L) des beziehungsweise der Gelegestreifen, die durch das Füllmaterial (31) verklebt werden sollen, nachgeschnitten wird, indem man den bzw. die Gelegestreifen (7, 107, 207) kontaktierend an einem Messer (32) vorbeilaufen lässt, das an dem der betrachteten Kante nächstgelegenen Verstärkungsfaden (4) in gleitender Anlage liegt, so dass die Bewegung der Gelegestreifen (7, 107) relativ zu dem Messer (32) es ermöglicht, vor dem Fügen eine etwaige Gummirestbreite (5) zu entfernen, die den Verstärkungsfaden (4) bedeckt, und dies, um den Verstärkungsfaden (4) über die Länge der betrachteten Kante (7L, 7F) freizulegen, so dass die seitliche Grenze des Verstärkungsfadens (4) den Verbindungszwischenraum (30) begrenzt, der das Füllmaterial (31) aufnimmt.

13. Verfahren nach Anspruch 12, **dadurch gekennzeichnet, dass** mindestens einer und bevorzugt mindestens zwei Gelegestreifen (7, 107, 207) metallische Verstärkungsfäden (4) enthalten, so dass beim Vorbereitungsschritt (a) oder beim Fügeschritt (b) mindestens eine Kante (7L, 107L) des beziehungsweise der Gelegestreifen, die durch das Füllmaterial (31) verklebt werden sollen, nachgeschnitten wird, indem man den bzw. die Gelegestreifen (7, 107, 207) kontaktierend an einem Messer (32) vorbeilaufen lässt, das an dem der betrachteten Kante nächstgelegenen metallischen Verstärkungsfaden (4) in gleitender Anlage liegt, so dass die Bewegung der Gelegestreifen (7, 107) relativ zu dem Messer (32) es ermöglicht, vor dem Fügen eine etwaige Gummirestbreite (5) zu entfernen, die den metallischen Verstärkungsfaden (4) bedeckt, und dies, um den metallischen Verstärkungsfaden (4) über die Länge der betrachteten Kante (7L, 7F) freizulegen, so dass die seitliche Grenze des metallischen Verstärkungsfadens (4) den Verbindungszwischenraum (30) begrenzt, der das Füllmaterial (31) aufnimmt.

## Claims

1. Method for manufacturing webs (1) that are intended to be involved in the makeup of a reinforcing ply (2) for a tyre (20), preferably for a pneumatic tyre (20), said method comprising the following steps:
(i) a preparation step (a), during which a plurality of separate reels (6, 106, 206) are prepared, each containing a strip, known as a "straight-thread strip" (7, 107, 207), which is formed of a plurality of continuous reinforcing threads (4) that are embedded in at least one layer of rubber (5) and extend parallel to one another in the longitudinal direction (X7, X107, X207) of said strip, each of said straight-thread strips (7, 107, 207) having, perpendicularly to its reinforcing threads, a predetermined width known as the "frontal width" (W7, W107, W207); then
(ii) a butt-joining step (b), during which the straight-thread strips (7, 107, 207) contained on said plurality of separate reels (6, 106, 206) are unwound simultaneously, and said straight-thread strips (7, 107, 207) are butt-joined in pairs in one and the same common longitudinal direction (X3), so as to combine all of said straight-thread strips into a straight-thread ply (3), the reinforcing threads (4) of which extend in the common longitudinal direction (X3), and which has, perpendicularly to said reinforcing threads (5), a straight-thread ply frontal width (W3) that is greater than the individual frontal width (W7, W107, W207) of each straight-thread strip; then
(iii) a cutting step (c), during which the straight-thread ply (3) is inserted into a cutter (8) that has a given maximum cutting capacity, known as the "cutter inlet width" (W8), which corresponds to the largest frontal width of a straight-thread ply (3) that can be inserted into the inlet of said cutter (8), then, by means of said cutter, the straight-thread ply (3) is severed transversely, several times over, in a cutting direction (C8) that is secant to the direction of the reinforcing threads (4), so as to form portions of straight-thread ply known as "webs" (1) of predetermined length (L1);
the said method being **characterized in that** the frontal width (W3) of the straight-thread ply (3) that is produced during the butt-joining step (b) and then inserted into the cutter (8) during the cutting step (c) is equal to or greater than 50%, preferably equal to or greater than 75%, preferentially equal to or greater than 80%, or even equal to or greater than 90%, of the cutter inlet width (W8), whereas the widest frontal width (W7, W107, W207) of the straight-thread strips that are butt-joined to make said straight-thread ply (3) is less than or equal to 50%, preferably less than or equal to 40%, preferentially less than or equal to 25%, optionally, preferably, less than or equal to 10%, or even less than or equal to 5%, of said cutter inlet width (W8).

2. Method according to Claim 1, **characterized in that**, during the preparation step (a), a calender (10) is supplied by one or more reinforcing-thread reels (11) that contain as many separate reinforcing threads (4) as necessary to cover a desired frontal width (W7, W107, W207) of a straight-thread strip (7, 107, 207), **in that** the length of each reinforcing thread initially stored on said reinforcing-thread reel or reels, known as the "nominal storage length" (L4_base), is identical, with a predetermined tolerance less than or equal to 20%, from one reinforcing thread (4) to another, and **in that**, during a calendering operation, a continuous straight-thread strip known as a "rough straight-thread strip" (12), which has the desired frontal width (W12) and a length known as the "rough length" (L12), which is equal to at least 80%, preferably to at least 90%, to at least 95%, to at least 99%, or even to 100%, of the nominal storage length is produced on said calender (10), from said reinforcing threads, and then said rough straight-thread strip (12) is distributed to a plurality of separate reels (6, 106, 206) of straight-thread strips (7, 107, 207) that are then used jointly during the butt-joining step (b).

3. Method according to Claim 2, **characterized in that**, during the preparation step (a), each of the separate reels (6, 106, 206) receives a portion of the rough straight-thread strip (12) with a length (L7, L107, L207) of between 5% and 50% of the rough length (L12).

4. Method according to Claim 2 or 3, **characterized in that** the nominal storage length (L4_base) of each reinforcing thread (4) stored on the reinforcing-thread reel(s) (11) used by the calender (10) is between 200 m and 70 000 m, preferably between 1000 m and 35 000 m.

5. Method according to one of the preceding claims, **characterized in that** each straight-thread strip (7, 107, 207) used has a frontal width (W7, W107, W207) of between 5% and 20% of the cutter inlet width (W8).

6. Method according to one of the preceding claims, **characterized in that** the straight-thread strips (7, 107, 207) each have a frontal width (W7, W107, W207) of between 30 mm and 700 mm, preferably between 40 mm and 200 mm.

7. Method according to one of the preceding claims, **characterized in that** the cutter inlet width (W8) is between 300 mm and 2000 mm, preferably between 700 mm and 1600 mm, and for example equal to 800 mm, to 1000 mm, to 1200 mm, to 1400 mm or to 1600 mm.

8. Method according to one of the preceding claims, **characterized in that** each reel (6, 106, 206) of the plurality of separate reels that are prepared during the preparation step (a) and that is then used jointly with the other reels during the butt-joining step (b), contains a continuous straight-thread strip (7, 107, 207), the length (L7, L107, L207) of which is between 200 m and 30 000 m.

9. Method according to one of the preceding claims, **characterized in that** the total surface area of the webs (1) to be produced, known as the useful web surface area, is generated, during the preparation step (a), by one and the same operation of calendering a rough straight-thread strip (12), the developed surface area of which is between 100% and 120% of said useful web surface area, and **in that** said rough straight-thread strip (12) is distributed substantially equally to a predetermined number of separate reels (6, 106, 206), preferably between 2 and 10, that each receive a corresponding fraction of the developed surface area of said rough straight-thread strip, and then all of said reels (6, 106, 206) are used jointly during the butt-joining step (b).

10. Method according to one of the preceding claims, **characterized in that** the cutting direction (C8) forms a cutting angle (α2) with respect to the common longitudinal direction (X3) of the straight-thread ply (3), and **in that**, during the initialization of the butt-joining step (b), the straight-thread strips (7, 107, 207) coming from the separate reels (6, 106, 206) are presented in a stepped manner by longitudinally offsetting the respective fronts (7F, 107F, 207F) of said straight-thread strips with respect to one another at a longitudinal offset (X offset) that depends on the value of the cutting angle (α2).

11. Method according to one of the preceding claims, **characterized in that**, during the butt-joining step (b), the straight-thread strips (7, 107, 207) are disposed in parallel in pairs, such that said straight-thread strips have their respective selvedges (7L, 107L) facing one another and such that said selvedges are spaced apart from one another and delimit, between one another, a gap known as the "join gap" (30) of predetermined width (W30), and **in that** said straight-thread strips (7, 107) are butt-joined by injecting into the join gap (30) a malleable filling material (31), of the rubber or glue type, which bonds the selvedge (7L) of one of the straight-thread strips (7) to the selvedge (107L) of the other straight-thread strip (107).

12. Method according to Claim 11, **characterized in that**, during the preparation step (a) or during the butt-joining step (b), at least one selvedge (7L, 107L) of said straight-thread strip or, respectively, said straight-thread strips intended to be bonded by the filling material (31) is trimmed by making said straight-thread strip or, respectively, said straight-thread strips (7, 107, 207) run in contact with a knife (32) that bears in a sliding manner against the reinforcing thread (4) that is closest to the selvedge in question, such that the relative movement of the straight-thread strips (7, 107) with respect to the knife (32) makes it possible to eliminate, before butt-joining, any residual width of rubber (5) that covers the reinforcing thread (4), specifically in order to expose the reinforcing thread (4) along the length of the selvedge (7L, 7F) in question, such that the lateral limit of said reinforcing thread (4) delimits the join gap (30) that receives the filling material (31).

13. Method according to Claim 12, **characterized in that** at least one, and preferably at least two, of the straight-thread strips (7, 107, 207) contain metallic reinforcing threads (4), such that, during the preparation step (a) or during the butt-joining step (b), at least one selvedge (7L, 107L) of said straight-thread strip or, respectively, said straight-thread strips intended to be bonded by the filling material (31) is trimmed by making said straight-thread strip or, respectively, said straight-thread strips (7, 107, 207) run in contact with a knife (32) that bears in a sliding manner against the metallic reinforcing thread (4) that is closest to the selvedge in question, such that the relative movement of the straight-thread strips (7, 107) with respect to the knife (32) makes it possible to eliminate, before butt-joining, any residual width of rubber (5) that covers the metallic reinforcing thread (4), specifically in order to expose the metallic reinforcing thread (4) along the length of the selvedge (7L, 7F) in question, such that the lateral limit of said metallic reinforcing thread (4) delimits the join gap (30) that receives the filling material (31).
